(19) **Europäisches Patentamt**

**European Patent Office**

**Office européen des brevets**

(11) Numéro de publication: **0 278 888 B1**

(12) **FASCICULE DE BREVET EUROPEEN**

(45) Date de publication de fascicule du brevet: **09.06.93** (51) Int. Cl.⁵: **C09J 193/04**, C09K 3/14

(21) Numéro de dépôt: **88450004.2**

(22) Date de dépôt: **28.01.88**

Le dossier contient des informations techniques présentées postérieurement au dépôt de la demande et ne figurant pas dans le présent fascicule.

(54) **Utilisation d'use colle pour la palettisation.**

(30) Priorité: **29.01.87 FR 8701293**

(43) Date de publication de la demande:
**17.08.88 Bulletin 88/33**

(45) Mention de la délivrance du brevet:
**09.06.93 Bulletin 93/23**

(84) Etats contractants désignés:
**BE DE ES FR GB IT LU NL SE**

(56) Documents cités:
**EP-A- 0 173 179**

**CHEMICAL ABSTRACTS, vol. 103, 1985, page 82, résumé no. 143517e, Columbus, Ohio, US**

**Norme DIN 68602 April 1979**

**Norme AFNDR NF-H-00-050**

(73) Titulaire: **SOCIETE NOUVELLE BRIANCON S.A.R.L.**
**Z.I. Thibault**
**F-31084 Toulouse Cedex(FR)**

(72) Inventeur: **De Saint Blanquat, Bernard**
**Z.I. Thibault**
**F-31084 Toulouse Cédex(FR)**
Inventeur: **Marsaleix, Régine**
**Z.I. Thibault**
**F-31084 Toulouse Cédex(FR)**

(74) Mandataire: **Ravina, Bernard**
**Cabinet Bernard RAVINA 24, boulevard Riquet**
**F-31000 Toulouse (FR)**

**Description**

La présente invention concerne l'utilisation d'une colle comportant uniquement comme agent collant de la colophane, lors de la palettisation. On entend par colle de palettisation une colle avec laquelle une faible partie de la surface de sacs ou de caisses est traitée lors de leur mise sur palette. Ce traitement a comme but de stabiliser en position ces sacs ou ces caisses pendant leur transport sur palette.

En général, une colle quelconque utilisée lors de la palettisation doit être suffisamment résistante aux forces de cisaillement de telle sorte que la pile de sacs ou de caisses, mise sur palettes, soit solidaire c'est-à-dire que les sacs ou les caisses ne glissent pas les uns sur les autres pendant le transport ou la manutention.

La résistance à la traction verticale d'une colle utilisée lors de la paléttisation , c'est-à-dire la résistance à la force à exercer verticalement par rapport aux surfaces traitées pour séparer les sacs ou les caisses, doit être faible. Cette résistance doit néanmoins être suffisante pour que les vibrations lors du transport ne provoquent pas une rupture du joint de colle, ceci bien évidemment sans endommager ces sacs ou ces caisses.

Une colle utilisée lors de la palettisation doit remplir ces deux conditions de résistances mécaniques. En plus elle doit présenter les caractéristiques suivantes:
- résistance à l'humidité,
- résistance à la variation de température,

Enfin une bonne colle utilisée lors de la palettisation ne doit pas tacher les sacs ou les caisses à traiter, elle ne doit pas ni être trop agressive vis à vis de la matière constituant leurs surfaces extérieures, ni dissoudre éventuellement l'encre utilisée pour écrire sur ces surfaces. On connaît le brevet FR-A-2 176 936 qui décrit une colle de palettisation constituée par une solution aqueuse contenant un composé hydrosoluble de legnine auquel aucun composant facilitant la polymérisation n'est ajouté.
Cette colle a la faculté d'être répartie d'une façon homogène sur les surfaces en plastique sans former de gouttelettes, par contre elle résiste peu à l'humidité vue sa nature aqueuse.

A l'heure actuelle, certaines autres colles normales, c'est-à-dire conçues à des fins autres que la palettisation sont utilisées. Elles provoquent souvent un collage assez puissant et par conséquent causent l'endommagement des sacs ou des caisses lors de dépaléttisation.

Pour ces raisons, la présente invention a trait à l'utilisation d'une colle de paléttisation remplissant les conditions et évitant les inconvénients ci-avant cités.

A cet effet la colle utilisée lors de la palettisation, faisant l'objet de l'utilisation selon la présente invention, se caractérise essentiellement en ce qu'elle comporte uniquement comme agent collant, de la colophane qu'est très peu élastique et cassante à l'état sec, dissoute dans un solvant organique peu ou non agressif vis à vis de la matière constituant la surface des supports à traiter.

D'autres avantages et caractéristiques apparaîtront à la lecture de la description détaillée donnée ci-dessous.

La caractéristique essentielle de la colle utilisée lors de la palettisation, conformément à l'utilisation selon l'invention, est la non-élasticité et la fragilité de la matière sèche qui reste entre les surfaces collées une fois que les liquides constituant une partie de la dite colle s'évaporent.

Vu la fragilité et la non-élasticité de cette matière qui joint deux surfaces, comme par exemple celles de deux sacs ou de deux caisses mis l'un sur l'autre, la pellicule de la matière sèche étendue entre ces deux surfaces résiste très peu au pelage, c'est-à-dire à l'arrachage, vu sa faible épaisseur, mais elle résiste beaucoup mieux aux forces de cisaillement vu l'importance relative de son étendue par rapport à son épaisseur.

Selon l'invention, la colle utilisée lors de la palettisation comporte uniquement comme agent collant de la colophane.

La colophane issue de gemme de pin est caractérisée par le fait qu'elle est très peu élastique et cassante à l'état sec.

La colophane est dissoute dans un solvant ou dans un mélange de solvants choisi selon les critères suivants:
- le pouvoir de dissoudre la colophane
- l'inflammabilité.
- l'aggressivité vis à vis du support à traiter.
- la volatilité.

Un bon solvant ou un bon mélange de solvants doit:
- pouvoir dissoudre facilement la colophane,
- être ininflammable.

- être non agressif ou peu agressif vis à vis du support à traiter.
- être plus ou moins volatile suivant les temps ouverts et les temps de prises recherchés.

Bien qu'un très grand nombre de solvants organiques puissent être utilisés, selon la présente invention, il est préférable pour des raisons de sécurité, d'utiliser un solvant ou un mélange de solvant dont l'inflammabilité est nulle ou très réduite.

Les supports habituellement traités par une colle de palettisation sont soit des supports en plastique comme par exemple les sacs fabriqués en polyéthylène ou en polypropylène soit des supports en papier ou en carton comme par exemple certains sacs ou certaines caisses.

En ce qui concerne les supports en papier, le choix d'un solvant est relativement facile; un solvant volatile ininflammable qui dissout facilement la colophane peut être par exemple le dichlorométhane $CH_2Cl_2$. Le choix de solvant pour la colophane en vue de traiter des supports en plastique est plus délicat; le solvant choisi ne doit pas être très agressif vis à vis du support, cependent ce solvant doit attaquer partiellement le support en vue de rendre la surface relativement rugueuse, ceci pour favoriser l'accrochage de la pellicule de colophane une fois que le solvant s'est évaporé.

Un exemple de solvant pouvant remplir ce rôle est le tétrachloroéthylène $CCl_2 = CCl_2$.

Les solvants chlorés sont en général préférés vu leur ininflammabilité et leur caractère inexplosif.

Le choix d'un solvant doit être fait en prenant en considération la nature du support à traiter.

Vu les restrictions émises sur le choix d'un solvant en ce qui concerne leur pouvoir à faire se dissoudre la colophane, leur aggressivité vis à vis du support et leur ininflammabilité, un deuxième solvant auxiliaire favorisant la solubilité de la colophane peut, selon l'invention, être ajouté en petite quantité. Ce solvant auxiliaire peut être un hydrocarbure comme par exemple l'heptane,ceci en quantité de 5 à 15 % et de préférence de 8 à 12% en poids.

Le solvant auxiliaire a comme rôle de faciliter la dissolution de la (colophane).

L'inflammabilité de ce solvant auxilliaire est atténuée par la coexistence du solvant chloré ininflammable en quantité plus importante.

Dans ce qui suit deux exemples sont donnés pour préparer, une colle de palettisation :

L'exemple 1 concerne une colle (A) de palettisation pour traiter des surfaces en plastique par exemple en polyéthylène et l'exemple 2 concerne une colle (B) de palettisation pour traiter des surfaces en papier ou en carton.

Les pourcentages donnés dans ces exemples, de même que ceux donnés dans la description toute entière et également dans les revendications sont donnés en poids.

EXEMPLE (1) : Colle (A)

- 55 à 70 % de colophane
- 20 à 35 % de tétrachloroéthylène
- 2 à 15 % d'heptane ou équivalent

EXEMPLE (2) Colle (B)

- 55 à 70 % de colophane
- 20 à 35 % de dichlorométhane
- 2 à 15 % d'heptane ou équivalent

Des expériences ont été effectuées pour apprécier les caractéristiques mécaniques de la colle préparée.

En ce qui concerne les mesures de resistance au cisaillement,les essais ont été effectués avec des colles de différentes concentrations,autrement dit de différentes viscosités,ceci à une température constante. En ce qui concerne les mesures de temps: temps de gommage, temps ouvert et temps de prise, les essais ont été effectués avec une colle de concentration de colophane moyenne d'environ 60 %.

Charge de rupture au cisaillement:

Ces essais ont été effectués à l'aide d'un dynamomètre Llonargy modèle DM 12.

Pour la colle (A), les supports utilisés sont des feuilles en polyéthylène d'une épaisseur de 150 micromètres "microns".

Pour la colle (B), les supports utilisés sont des feuilles en papier "KRAFT" d'un grammage de 100g/m2.

| COLLE | VISCOSITE en c Ps | NATURE EPROUVETTE | CHARGE RUPTURE AU CISAILLEMENT en Kg F pour cm2 de surface encollée | GRAMMAGE COLLE g/m2 |
|---|---|---|---|---|
| A | 170/290 ± 2 | P.E.ép150 microns | 0,25 à 0,28 ±0,002 | 50 à70 ±10 |
| B | 70 /130 ± 2 | Kraft 100g/m2 | 0,60 à 0,86 ± 0,002 | 50 à70 ±10 |

On remarque qu'en augmentant la concentration de la colle en résine, c'est-à-dire en augmentant sa viscosité, la charge de rupture au cisaillement augmente soit pour la colle (A) soit pour la colle (B), ceci bien évidemment pour un grammage de colle donné, c'est-à-dire pour une quantité identique de colle déposée par unité de surface.

MESURES DE TEMPS

Ces mesures de temps ont été effectuées à une température de 20°C

1) Temps de gommage:

C'est le temps qu'on doit laisser s'écouler entre l'application de la colle et l'assemblage de supports.

| | APPLICATION MANUELLE | APPLICATION PAR VAPORISATION | |
|---|---|---|---|
| COLLE A : | 8 à 10 minutes | 60 à 90 secondes | : |
| COLLE B : | 3 à 4 minutes | 40 à 60 secondes | : |

4

Le temps de gommage pour la colle A est beaucoup plus long que pour la colle B. Ceci est explicable en prenant en considération la nature du solvant de chaque colle et aussi la perméabilité du support : les supports en plastique sont beaucoup plus imperméables que ceux en papier (Kraft) et le tétrachloroéthylène est moins volatile que le dichlorométhane.

2/ Temps ouvert:

C'est le temps maximal d'attente entre l'application de la colle et l'assemblage des supports collés.

| | APPLICATION MANUELLE | : | APPLICATION PAR VAPORISATION | : |
|---|---|---|---|---|
| COLLE A : | 20 minutes | : | 2 minutes | : |
| | : | : | | : |
| COLLE B : | 10 minutes | : | 1 minute et 20 secondes | : |

3/ Temps de prise :

C'est le temps nécessaire pour un séchage définitif

| | APPLICATION MANUELLE | : | APPLICATION PAR VAPORISATION | : |
|---|---|---|---|---|
| COLLE A : | 2 H 30 mn – 3 H 00 | : | 3 – 5 minutes | : |
| | : | : | | : |
| COLLE B : | 2 H 00 mn | : | 2 – 3 minutes | : |

Il est clair que les temps mesurés varient selon le mode d'application de la colle. Les temps mesurés diminuent considérablement à l'application par vaporisation de la dite colle.

**Revendications**

1. Utilisation d'une colle comportant uniquement comme agent collant de la colophane pour traiter des sacs ou des caisses en plastique ou en papier, lors de la palettisation.

2. Utilisation selon la revendication 1 caractérisée en ce que l'agent collant est incorporé dans la colle à un pourcentage compris entre 60 et 70 %.

3. Utilisation selon la revendication 1 et la revendication 2 caractérisée en ce que la colle utilisée comporte :
   - 25 à 35 % de dichlorométhane ou de tétrachloroéthylène,
   - 5 à 15 % d'heptane.

**Claims**

1. Use of a glue whose sole adhesive agent is rosin to glue bags or plastic or paper boxes for palletizing.

2. Use a specified in claim 1 herein whereby the adhesive agent is incorporated in the glue at a percentage ranging from 60 to 70%

3. Use as specified in claim 1 and claim 2 herein whereby the glue used comprises:
   - 25 to 35% dichloromethane or tetrachloroethylene,
   - 5 to 15% of heptane.

**Patentansprüche**

1. Gebrauch eines Klebers, der als einziges Klebemittel Kolophonium enthält, zur Behandlung von Plastik- oder Papiertüten, bzw. Plastik- oder Papierkästen beim Palletieren.

2. Gebrauch wie unter Patentanspruch 1 beschrieben, der dadurch gekennzeichnet ist, daß der Anteil an Klebemittel im Kleber zwischen 60 und 70% beträgt.

3. Gebrauch wie unter Patentanspruch 1 und 2 beschrieben, der daduch gekennzeichnet ist, daß der Kleber:
   - 25 bis 35% Dichlormethan oder Tetrachlorethen
   - 5 bis 15% Heptan enthält.